# EUROPÄISCHE PATENTANMELDUNG

(11) **EP 1 069 309 A2**
(43) Veröffentlichungstag der Anmeldung: **17.01.2001**
(21) Anmeldenummer: 00113110.1
(22) Anmeldetag: 28.06.2000
(51) Int. Cl.: F02N 11/04, F02N 11/00

(54) **Antriebsvorrichtung**

(30) Priorität: 12.07.1999 DE 19932061
(71) Anmelder: Volkswagen Aktiengesellschaft, 38436 Wolfsburg (DE)
(72) Erfinder: Rennert, Ingo, 38539 Müden/Aller (DE); Hoffmann, Bernhard, Dipl.-Ing., 82319 Starnberg (DE)

(57) **Zusammenfassung**

Eine Antriebsvorrichtung für ein Kraftfahrzeug umfaßt einen Verbrennungsmotor (1) mit einer Kurbelwelle (2) sowie eine Starter/Generatoreinheit (8), welche auf der einem nachgeschalteten Getriebe (4) gegenüberliegenden Seite des Verbrennungsmotors (1) angeordnet ist. Diese Anordnung besitzt den Vorteil, daß keine Änderungen an dem Verbrennungsmotor (1), dem Getriebe (4) und den entsprechenden Montagevorrichtungen erforderlich sind und die Antriebsvorrichtung axial nur unwesentlich verlängert wird. Zur wirkungsvollen Bedämpfung von möglicherweise durch die Starter/Generator-Einheit (8) hervorgerufenen Schwingungen der Kurbelwelle (2) sind entsprechende Mittel (11, 14, 15) vorgesehen, wobei dies beispielsweise durch Erfassung der Drehzahl der Kurbelwelle (2) und entsprechende Ansteuerung der Starter/Generator-Einheit (8) erfolgen kann.

## Beschreibung

Die vorliegende Erfindung betrifft eine Antriebsvorrichtung mit einer elektrischen Maschine nach dem Oberbegriff des Anspruches 1. Insbesondere betrifft die vorliegende Erfindung eine Antriebsvorrichtung für ein Kraftfahrzeug, welche eine in Form einer Starter/Generator-Einheit ausgestaltete elektrische Maschine aufweist.

Starter/Generator-Systeme sind weitläufig bekannt und ermöglichen einerseits einen schnelleren und leiseren Start des damit gekoppelten Antriebsmotors und andererseits eine hohe Generatorleistung, um Energie für bestimmte Verbraucher des Kraftfahrzeugs bereitzustellen.

Zur Ausgestaltung derartiger Starter/Generator-Systeme sind unterschiedliche Varianten bekannt.

Eine erste Variante sieht die Verwendung eines parallel zu der Antriebswelle des Antriebsmotors angeordneten Klauenpolgenerators vor, wobei der Klauenpolgenerator über einen Riemen mit dem Antriebsmotor gekoppelt ist. Gemäß einer weiteren Variante wird als Starter/Generator-Einheit eine schwungnutzende Doppelkupplungsmaschine mit mechanischem Energiespeicher verwendet.

Den beiden zuvor genannten Varianten ist gemeinsam, daß die Starter/Generator-Einheit getrennt von der Antriebswelle des Antriebsmotors vorgesehen ist. Bei einer dritten Variante, die einer Antriebsvorrichtung nach dem Oberbegriff des Anspruches 1 entspricht, ist hingegen die (auch als Kurbelwellenstartergenerator bezeichnete) Starter/Generator-Einheit auf der Antriebswelle vorgesehen.

Der grundsätzliche Aufbau einer derartigen Antriebsvorrichtung mit einer auf der Antriebswelle angeordneten Starter/Generator-Einheit kann beispielsweise den Druckschriften WO 98/05882, DE 196 16 504 A1, DE 196 32 074 A1 oder DE 43 36 162 A1 entnommen werden. Bei diesen bekannten Antriebsvorrichtungen wird als Antriebsaggregat ein Verbrennungsmotor verwendet, dessen Kurbelwelle mit einer als Starter/Generator-Einheit dienenden elektrischen Maschine verbunden ist. Die elektrische Maschine umfaßt einen Rotor und einen den Rotor umgebenden Stator, wobei die Wicklungen des Stators über einen Wechselrichter mit der Kraftfahrzeugbatterie verbunden sind. Der Rotor der elektrischen Maschine steht abtriebsseitig über eine Getriebekupplung mit der Getriebeeingangswelle eines Getriebes in Verbindung.

Die als Starter/Generator-Einheit dienende elektrische Maschine wird in zwei unterschiedlichen Betriebsmodi betrieben. In einem Motorbetrieb übernimmt die elektrische Maschine bei Betätigen des Anlasserschlüssels die Funktion eines Anlassers oder Motors zum Starten des Verbrennungsmotors. Hierzu werden den Statorwicklungen entsprechende Erregerströme derart zugeführt, daß der Rotor mit einem Anlaufdrehmoment beaufschlagt wird, welches das Starten des Verbrennungsmotors ermöglicht. Nach dem Starten des Verbrennungsmotors arbeitet die elektrische Maschine im Generatorbetrieb, in dem der Rotor über die Kurbelwelle des Verbrennungsmotors in Rotation versetzt und somit in den Statorwicklungen eine Spannung induziert wird, welche beispielsweise zur Energieversorgung des Bordnetzes bzw. der daran angeschlossenen Verbraucher des Kraftfahrzeuges dient.

Wie oben beschrieben worden ist, ist bei diesen bekannten gattungsgemäßen Antriebsvorrichtungen die auf der Kurbelwelle befindliche Starter/Generator-Einheit zwischen dem Verbrennungsmotor und dem Getriebe angeordnet. Eine derartige Anordnung hat jedoch eine axiale Verlängerung der gesamten Antriebsvorrichtung zur Folge, da für jedes Kilowatt Leistung der Starter/Generator-Einheit eine Verlängerung von ca. 1cm erforderlich ist. Darüber hinaus müssen die Montagevorrichtungen, welche zum Zusammenfügen des Getriebes 4 und des Motors 1 dienen, aufgrund der Anordnung der Starter/Generator-Einheit zwischen dem Motor 1 und dem Getriebe 4 verändert und angepaßt werden, was entsprechende Kosten zur Folge hat.

Der vorliegenden Erfindung liegt daher die Aufgabe zugrunde, eine Antriebsvorrichtung mit einer auf einer Antriebswelle eines Antriebsaggregats angeordneten elektrischen Maschine bereitzustellen, welche sich möglichst einfach und billig sowie ohne einer wesentlichen axialen Verlängerung der Antriebsvorrichtung realisieren läßt.

Diese Aufgabe wird gemäß der vorliegenden Erfindung durch eine Antriebsvorrichtung mit den Merkmalen des Anspruches 1 gelöst. Die Unteransprüche definieren bevorzugte und vorteilhafte Ausführungsformen der vorliegenden Erfindung.

Erfindungsgemäß wird die insbesondere in Form einer Starter/Generator-Einheit mit einem Rotor und einem Stator ausgestaltete elektrische Maschine auf der dem Getriebe abgewandten Seite der Antriebswelle angeordnet. Bei Verwendung eines Verbrennungsmotors ist somit dieser zwischen der mit dem einen Ende der Antriebs- oder Kurbelwelle gekoppelten elektrischen Maschine und dem mit dem anderen Ende der Kurbelwelle gekoppelten Getriebe angeordnet. Diese Anordnung eigenet sich sowohl für einen Längs- als auch für einen Quereinbau bezüglich der Fahrtrichtung.

Die vorliegende Erfindung ermöglicht die Anordnung der elektrischen Maschine auf der Antriebswelle ohne Änderungen am Motor, am Getriebe oder an den Montagevorrichtungen. Es wird kein zusätzlicher Baurraum benötigt. Die Erfindung läßt sich ohne wesentliche axiale Verlängerung der Anordnung realisieren. Unter Berücksichtigung sämtlicher Aspekte handelt es sich demzufolge um die kostengünstigste Variante, um die elektrische Maschine auf der Antriebswelle anzuordnen.

Des weiteren ist die erfindungsgemäße Anordnung äußerst kundendienstfreundlich, da die elektrische Maschine leicht von außen zugänglich ist.

Darüber hinaus können komplizierte und demzufolge anfällige Zwischengetriebe vermieden werden. Der üblicherweise auf der Seite der Kurbelwelle, auf welcher erfindungsgemäß die elektrische Maschine angeordnet ist, befindliche Riementrieb zur Betätigung des Klimakompressors, der Lenkhilfepumpe usw. des Kraftfahrzeugs kann entfallen, wenn die mit dem Riemen üblicherweise betätigten Aggregate elektrifiziert werden und beispielsweise im Generatorbetrieb direkt von der elektrischen Maschine mit Energie versorgt werden.

Durch geeignete Maßnahmen kann das durch die erfindungsgemäße Anordnung möglicherweise auftretende Problem von Antriebs- oder Kurbelwellenschwingungen gelöst werden. Zu diesem Zweck können zwischen dem Rotor der elektrischen Maschine und der Antriebswelle mechanische Dämpfungsmittel, wie z.B. Federtilger, vorgesehen werden. Ebenso ist eine drehzahladaptive Dämpfung durch entsprechende Regelung der dem Rotor der elektrischen Maschine zugeführten Energie in Abhängigkeit von der Drehzahl der Antriebswelle denkbar.

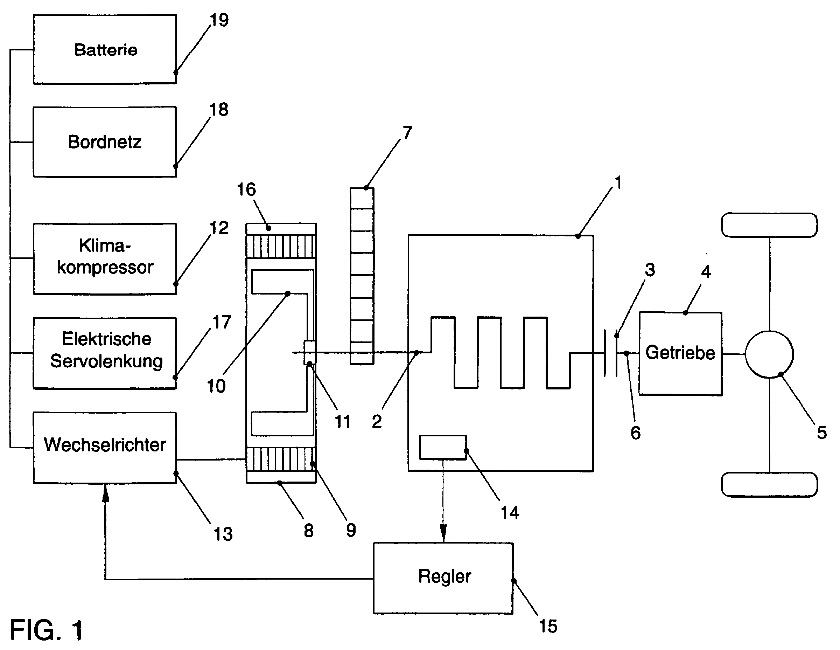

Die Erfindung wird nachfolgend unter Bezugnahme auf die einzige Figur (Fig. 1) anhand eines bevorzugten Ausführungsbeispiels beschrieben. Dabei ist in Fig. 1 schematisch der Aufbau einer erfindungsgemäßen Antriebsvorrichtung in Form eines Blockschaltbilds dargestellt.

In Fig. 1 ist ein Verbrennungsmotor 1 eines Kraftfahrzeugs dargestellt, über dessen von den Kolben des Verbrennungsmotors 1 angetriebene Kurbelwelle 2 ein Drehmoment über eine Getriebekupplung (bzw. über einen Wandler bei einem Automatikgetriebe) auf die Getriebeeingangswelle 6 eines Schalt- oder Automatikgetriebes 4 zum Antrieb der am Fahrwerk 5 des Kraftfahrzeugs angebrachten Räder übertragen wird.

Auf der dem Getriebe 4 gegenüberliegenden Seite des Verbrennungsmotors 1 ist eine elektrische Maschine 8 angeordnet. Diese elektrische Maschine 8 dient als Starter/Generator-Einheit und ermöglicht einerseits einen einfachen Start des Verbrennungsmotors 1 und andererseits eine hohe Generatorleistung, um nach dem Starten des Verbrennungsmotors 1 Energie für bestimmte Verbraucher des Kraftfahrzeugs bereitzustellen. Zu diesem Zweck umfaßt die elektrische Maschine einen auf die Kurbelwelle 2 aufgesetzten Rotor 10, welcher innerhalb einer oder mehrerer Statorwicklungen 9 drehbar angeordnet ist.

Die elektrische Maschine 8 kann beispielsweise in Form einer 42V-Asynchronmaschine mit einer Leistung von 5kW und einem Wirkungsgrad von 80% ausgestaltet sein. Ebenso ist auch die Ausgestaltung in Form einer Synchronmaschine möglich. Im Motorbetrieb übernimmt die elektrische Maschine 8 bei Betätigen des Anlasserschlüssels die Funktion eines Anlassers zum Starten des Verbrennungsmotors 1. Hierzu wird den Statorwicklungen 9 eine entsprechende Energie von einem Wechselrichter 13 mit Siedebadkühlung zugeführt, der eine an ihm anliegende Gleichspannung in einen Drehstrom zum Betreiben der elektrischen Maschine 8 umsetzt, so daß der Rotor 10 mit einem Anlaufdrehmoment beaufschlagt wird, welches das Starten des Verbrennungsmotors 1 ermöglicht. Nach dem Starten des Verbrennungsmotors 1 befindet sich die elektrische Maschine 8 im Generatorbetrieb, wobei der Rotor 10 über die Kurbelwelle 2 des Verbrennungsmotors 1 in Rotation versetzt und somit in den Statorwicklungen 9 eine Spannung induziert wird, welche zur Energieversorgung von verschiedenen Verbrauchern des Kraftfahrzeuges dient. So wird u.a. die von dem Stator 9 gelieferte Spannung bzw. der entsprechende Drehstrom von dem Wechselrichter 13 in eine Versorgungsgleichspannung für das Bordnetz 18 bzw. die daran angeschlossenen Verbraucher des Kraftfahrzeugs und die Fahrzeugbatterie 19 umgewandelt.

Wie in Fig. 1 anhand des Klimakompressors 12 des Kraftfahrzeugs gezeigt ist, werden im Generatorbetrieb auch diejenigen Verbraucher von der elektrischen Maschine 8 mit elektrischer Energie versorgt, welche üblicherweise über einen sogenannten Poly-V-Riemen angetrieben werden, da erfindungsgemäß die elektrische Maschine 8 an demjenigen Ende der Kurbelwelle 2 angeordnet ist, an dem bei herkömmlichen Vorrichtungen dieser Riemen zum mechanischen Antrieb des Klimakompressors, einer Lenkhilfepumpe und in einigen Fällen auch einer Wasserpumpe, vorgesehen ist. Daher sind gemäß Fig. 1 ein elektrischer Klimakompressor 12 und eine elektrische Servolenkung 17 vorhanden, die im Generatorbetrieb über den Wechselrichter 13 betrieben werden. Durch Entfall des zuvor erwähnten Riementriebs ist ausreichend Platz für die elektrische Maschine 4 vorhanden. Voraussetzung hierfür ist jedoch, daß die üblicherweise mechanisch mit dem genannten Riemen angetriebenen Aggregate elektrifiziert, d.h. elektrisch betrieben werden, so daß auf den Riementrieb verzichtet werden kann.

Der üblicherweise zwischen dem Motor 1 und dem Getriebe 4 vorgesehene Zahnkranz und der Starter können entfallen.

Weiterhin vorhanden ist hingegen gemäß Fig. 1 ein Zahnriemen 7 für den Ventiltrieb sowie die Öl- und Wasserpumpe. Werden auch diese Aggregate elektrifiziert, kann zusätzlich der Zahnriemen 7 entfallen.

Der Stator der in Fig. 1 gezeigten elektrischen Maschine 8 besitzt eine umlaufende Wasserkühlung 16. Vorteilhafterweise kann die Energieversorgung bzw. Elektronik der elektrischen Maschine 8, d.h. der Wechselrichter 13, in den Rotor-Hohlraum der elektrischen Maschine 8 integriert werden, wodurch der benötigte Bauraum weiter reduziert wird. Zudem kann dann mit Hilfe der ohnehin vorgesehenen Wasserkühlung 16 auch der Wechselrichter 13 gekühlt werden.

Die Anordnung der elektrischen Maschine 8 auf der dem Getriebe 4 gegenüberliegenden Seite der Kurbelwelle 2 besitzt als weiteren Vorteil, daß die Abmessungen der elektrischen Maschine 8 lediglich nach unten durch die Abdeckungslinie des Motorgehäuses begrenzt ist, um ein Aufsetzen auf den Fahruntergrund zu verhindern. Auf diese Weise kann für die elektrische Maschine 8 der zur Verfügung stehende Bauraum bestmöglich ausgenutzt werden. Vorteilhafterweise wird die elektrische Maschine 8 mit einem im Verhältnis zu seiner axialen Baulänge relativ großen Durchmesser ausgestaltet, wobei der Durchmesser insbesondere dem fünf- bis sechsfachen Wert der Baulänge der elektrischen Maschine entsprechen kann. Bevorzugte Werte des Durchmessers liegen zwischen 300mm und 400mm, z.B. 344mm. Die axiale Baulänge der elektrischen Maschine 8 bzw. deren Gehäuse beträgt vorzugsweise ca. 60mm.

Durch die erfindungsgemäße Anordnung der elektrischen Maschine 8 auf der dem Getriebe 4 gegenüberliegenden Seite der Kurbelwelle 2 können gegebenenfalls durch die somit an diesem Ende zusätzlich vorgesehene Schwungmasse des Rotors 10 Kurbelwellenschwingungen hervorgerufen werden, welche es zu vermeiden oder zu unterdrücken gilt, da ansonsten im schlimmsten Fall, d.h. im Resonanzfall, eine Zerstörung der Antriebsvorrichtung verursacht werden kann.

Für die Getriebeeingangswelle 6 sind diesbezüglich bereits (in Fig. 1 der Einfachheit halber nicht gezeigte) Maßnahmen bekannt, weche darauf abzielen, die Schwingungen der Getriebeeingangswelle 6 zu unterdrücken. So kann am antriebsseitigen Ende der Getriebeeingangswelle 6 ein sogenanntes Zweimassenschwungrad zum Tilgern oder Dämpfen der Schwingungen vorgesehen sein. Bei einem Automatikgetriebe 4 dämpft bereits der dem Automatikgetriebe vorgeschaltete Wandler 3 aufgrund seiner hydraulischen Arbeitsweise die auf die Getriebeeingangswelle übertragenen Schwingungen.

Aufgrund der Anordnung der elektrischen Maschine 8 am anderen Ende der Kurbelwelle 2 müssen entsprechende Mittel vorgesehen werden, welche eine Dämpfung oder ein Begrenzen der auf die Kurbelwelle 2 übertragenen Schwingungen ermöglichen. So sollte das Gewicht und die Trägheit des Rotors 10 der elektrischen Maschine 8 soweit wie möglich reduziert werden, um die Dynamik der Antriebsvorrichtung nicht mehr als nötig zu beeinträchtigen. Des weiteren können zwischen dem Rotor 10 und der Kurbelwelle 2 Mittel vorgesehen werden, welche die auf die Kurbelwelle 2 übertragenen Schwingungen dämpfen. Neben den zuvor bezüglich der Getriebeeingangswelle 6 beschriebenen Möglichkeiten können diese Mittel beispielsweise auch einen in Fig. 1 angedeuteten Federtilger 11 oder dergleichen umfassen. Da jedoch die während des Betriebs erzeugte Wärme über die Kurbelwelle 2 abgeführt werden soll, ist diese Variante mit Problemen verbunden.

Darüber hinaus sind Massetilger mit dem Nachteil verbunden, daß sie grundsätzlich Energie kosten. In Fig. 1 ist daher eine weitere Maßnahme zur Beschränkung von Kurbelwellenschwingungen dargestellt. Ein für weitere Anwendungen üblicherweise ohnehin auf der Nockenwelle befindlicher Drehzahlsensor 14 überwacht oder mißt die Drehung bzw. Drehzahl der Kurbelwelle 2. Üblicherweise wird von dem Drehzahlsensor während des Betriebs ein sinusförmiges Signal erfaßt, welches im Resonanzfall mit Stromrippeln beaufschlagt ist. Eine Steuer- oder Regeleinheit 15 wertet eine von dem Drehzahlsensor 14 erfaßte unerwünschte Drehschwingungstendenz der Kurbelwelle 2 aus und steuert entsprechend den Wechselrichter 13 gegensinnig an, um übermäßige Kurbelwellenschwingungen zu dämpfen bzw. außer Tritt zu bringen. Die Funktion der in Fig. 1 gezeigten Regel- oder Steuereinheit 15 kann beispielsweise softwaremäßig implementiert sein.

### BEZUGSZEICHENLISTE

- 1: Verbrennungsmotor
- 2: Kurbelwelle
- 3: Getriebekupplung
- 4: Getriebe
- 5: Fahrwerk
- 6: Getriebeeingangswelle
- 7: Zahnriemen
- 8: Starter/Generator-Einheit
- 9: Stator
- 10: Rotor
- 11: Federtilger
- 12: Elektrischer Klimakompressor
- 13: Wechselrichter
- 14: Drehzahlsensor
- 15: Wechselrichter-Regler
- 16: Wasserkühlung
- 17: Elektrische Servolenkung
- 18: Bordnetz
- 19: Fahrzeugbatterie

## Patentansprüche

1. Antriebsvorrichtung,
mit einem Antriebsaggregat (1) mit einem nachgeschalteten Getriebe (4), und
mit einer elektrischen Maschine (8), welche mindestens einen Stator (9) und mindestens einen auf einer durch das Antriebsaggregat (1) verlaufenden Antriebswelle (2) angeordneten Rotor (10) umfaßt,
dadurch gekennzeichnet,
daß die elektrische Maschine (8) an der Antriebswelle (2) auf der dem Getriebe (4) gegenüberliegenden Seite des Antriebsaggregats (1) angeordnet ist.

2. Antriebsvorrichtung nach Anspruch 1,
dadurch gekennzeichnet,
daß das Antriebsaggregat (1) ein Verbrennnungsmotor (1) und die Antriebswelle (2) eine Kurbelwelle des Verbrennungsmotors (1) ist.

3. Antriebsvorrichtung nach Anspruch 1 oder 2,
dadurch gekennzeichnet,
daß die elektrische Maschine (8) eine Asynchronmaschine ist.

4. Antriebsvorrichtung nach einem der vorhergehenden Ansprüche,
dadurch gekennzeichnet,
daß die elektrische Maschine (8) als Starter/Generator-Einheit ausgestaltet ist, welcher in einem ersten Betriebsmodus Energie zum Starten des Antriebsaggregats (1) zugeführt wird und welche in einem zweiten Betriebsmodus nach dem Starten des Antriebsaggregats (1) selber Energie zur Energieversogung mindestens eines elektrischen Verbrauchers (12, 17, 18) liefert.

5. Antriebsvorrichtung nach Anspruch 4,
dadurch gekennzeichnet,
daß die elektrische Maschine (8) einen in den Rotorbereich (10) integrierter Wechselrichter (13) besitzt, welcher in dem ersten Betriebsmodus eine Versorgungsgleichspannung in einen Drehstrom umsetzt und dem Stator (9) der elektrischen Maschine (8) zuführt und im zweiten Betriebsmodus von dem Stator (9) einen Drehstrom empfängt und in eine Versorgungsgleichspannung für mindestens einen elektrischen Verbraucher (12, 17, 18) umsetzt.

6. Antriebsvorrichtung nach Anspruch 5,
dadurch gekennzeichnet,
daß die elektrische Maschine (8) Kühlmittel (16) zum Kühlen sowohl der elektrischen Maschine (8) als auch des darin befindlichen Wechselrichters (13) umfaßt.

7. Antriebsvorrichtung nach Anspruch 5 oder 6,
dadurch gekennzeichnet,
daß mit dem Wechselrichter (13) als ein von der elektrischen Maschine (8) im zweiten Betriebsmodus zu betreibender Verbraucher eine elektrische Klimakompressoreinheit (12) und/oder eine elektrische Servolenkungseinheit (17) verbunden ist.

8. Antriebsvorrichtung nach einem der vorhergehenden Ansprüche,
dadurch gekennzeichnet,
daß Mittel (11, 14, 15) zur Drehschwingungsbegrenzung der Antriebswelle (2) vorgesehen sind.

9. Antriebsvorrichtung nach Anspruch 8,
dadurch gekennzeichnet,
daß die Drehschwingungsbegrenzungsmittel Überwachungsmittel (14) zum Überwachen der Drehung der Antriebswelle (2) und Mittel (15) zum Regeln der elektrischen Maschine (8) in Abhängigkeit von der Gleichförmigkeit der Drehung der Antriebswelle (2) umfassen.

10. Antriebsvorrichtung nach Anspruch 9,
dadurch gekennzeichnet,
daß die Überwachungsmittel einen Drehzahlsensor (14) umfassen.

11. Antriebsvorrichtung nach einem der vorhergehenden Ansprüche,
dadurch gekennzeichnet,
daß die elektrische Maschine (8) einen Durchmesser aufweist, welcher dem fünfbis sechsfachen Wert ihrer Baulänge entspricht.

12. Antriebsvorrichtung nach Anspruch 11,
dadurch gekennzeichnet,
daß der Durchmesser der elektrischen Maschine (8) 340 mm bis 350 mm und die Baulänge der elektrischen Maschine (8) ca. 60 mm beträgt.
